Europäisches Patentamt

European Patent Office

Office européen des brevets

(11) Numéro de publication: **0 343 057 B1**

# FASCICULE DE BREVET EUROPEEN

(45) Date de publication de fascicule du brevet: **11.08.93**  (51) Int. Cl.5: **G02B 6/44**, H02G 11/02

(21) Numéro de dépôt: **89401341.6**

(22) Date de dépôt: **12.05.89**

(54) **Enrouleur-dérouleur pour câbles à fibres optiques.**

(30) Priorité: **16.05.88 FR 8806534**

(43) Date de publication de la demande:
**23.11.89 Bulletin 89/47**

(45) Mention de la délivrance du brevet:
**11.08.93 Bulletin 93/32**

(84) Etats contractants désignés:
**BE DE GB SE**

(56) Documents cités:
EP-A- 0 216 582      DE-A- 2 810 023
DE-U- 7 936 831      DE-U- 8 633 663
DE-U- 8 801 683      US-A- 4 657 140
US-A- 4 657 165

(73) Titulaire: **COMMISSARIAT A L'ENERGIE ATO-MIOUE**
**31/33, rue de la Fédération**
**F-75015 Paris Cédex 15(FR)**

(72) Inventeur: **Blanc, Floréal**
**24, rue Blin**
**F-91370 Verrires le Buisson(FR)**
Inventeur: **Lordet, Jacques**
**9, rue de Paris**
**F-94100 Saint Maur des Fossés(FR)**

(74) Mandataire: **Mongrédien, André et al**
**c/o BREVATOME 25, rue de Ponthieu**
**F-75008 Paris (FR)**

EP 0 343 057 B1

## Description

Les enrouleurs sont des appareils permettant d'établir une liaison par câble entre un poste fixe et un poste mobile en déplacement. A mesure que le mobile s'éloigne, l'enrouleur fournit la longueur de câble nécessaire. Inversement, lorsque le mobile se rapproche, l'enrouleur absorbe l'excédent de câble.

On connaît déjà des dispositifs enrouleurs-dérouleurs pour des câbles électriques. Selon une première catégorie, ces dispositifs comportent des contacts électriques tournants réalisés par exemple par des frotteurs à balais se déplaçant sur des pistes de cuivre circulaires. Ces enrouleurs présentent l'avantage de ne pas limiter la rotation du tambour sur lequel le câble est enroulé. Toutefois, un enrouleur de ce type ne peut pas être utilisé pour un câble constitué de fibres optiques.

On connaît également des dispositifs à enroulements multiples. Les plus simples, dits "à double enroulement", comportent deux enroulements de câbles adjacents mais de sens opposés. Ils présentent l'inconvénient de n'être solidarisables ni avec la station fixe ni avec le mobile et doivent donc être guidés de façon à leur autoriser un débattement souvent égal à la moitié de la course du mobile.

On connaît également des systèmes à enroulement multiples plus complexes qui remédient à ces inconvénients. Mais ils sont plus lourds et encombrants et peuvent difficilement être transposés au cas d'un câble à fibres optiques pour lequel des spécifications de courbures limites doivent être scrupuleusement respectées.

Dans le domaine des câbles à fibres optiques, on connaît un connecteur tournant de fibres optiques dans lequel deux extrémités d'une fibre optique sont disposées dans le prolongement l'une de l'autre, l'une des fibres étant tournante et l'autre fixe. Toutefois, cette solution s'applique seulement à une fibre optique unique et ne peut pas être utilisée pour un câble à fibres optiques multivoies, c'est-à-dire comportant plusieurs fibres.

On cite à cet effet le document EP-A-0 216 582 qui décrit un appareil destiné à dérouler ou ramasser un câble, tel qu'une fibre optique. L'appareil est monté sur un véhicule mobile. Le câble passe à travers un bras monté pivotant. Selon la tension du câble, la position du bras change. Cette position sert à commander un moteur qui permet d'agir sur le support du tambour sur lequel est monté le câble, pour réguler la tension du câble.

La présente invention a précisément pour objet un enrouleur-dérouleur pour un câble à fibres optiques qui remédie aux inconvénients énumérés ci-dessus.

Cet enrouleur s'applique en particulier en télémanipulation et en robotique. Il peut équiper des dispositifs de transport de charge tels que des grues ou des ponts roulants industriels. Il s'applique particulièrement lorsque des données logiques ou analogiques doivent être transmises avec un taux d'erreur faible et avec une totale immunité vis-à-vis des perturbations électromagnétiques.

De manière plus précise, l'invention concerne un enrouleur-dérouleur pour un câble à fibres optiques principal comportant une pluralité de fibres optiques, ledit câble optique principal ayant une extrémité destinée à être fixé à une zone d'enroulement d'un tambour tournant, ledit enrouleur-dérouleur comprenant un support fixe, un tambour présentant une zone d'enroulement pour ledit câble à fibres optiques principal, ledit tambour étant monté tournant sur un axe monté sur le support fixe, caractérisé par un câble optique de compensation enroulé en spirale à l'intérieur du tambour et ayant une extrémité fixée sur ledit tambour et destinée à être raccordée à l'extrémité du câble optique principal, et ayant une extrémité montée sur une partie fixe du support.

De préférence, il comporte un ressort de rappel enroulé en spirale et ayant une extrémité solidaire d'une partie fixe du support et une extrémité montée fixe sur ledit tambour tournant.

D'autres caractéristiques et avantages de la présente invention apparaîtront encore à la lecture de la description qui suit d'un exemple de réalisation donné à titre illustratif et nullement limitatif, en référence aux figures annexées, sur lesquelles :
- la figure 1 est une vue en perspective d'un enrouleur-dérouleur conforme à l'invention,
- la figure 2 est une vue en coupe selon un plan passant par l'axe de rotation du tambour de l'enrouleur-dérouleur représenté sur la figure 1,
- la figure 3 est une vue schématique de l'enrouleur représenté sur les figures 1 et 2 montrant particulièrement la disposition du câble à fibres optiques de compensation,
- les figures 4a et 4b représentent schématiquement l'enrouleur-dérouleur lorsque le câble principal est en position enroulée (figure 4a) et en position déroulée (figure 4b),
- la figure 5 est un schéma à plus petite échelle qui montre le raccordement d'un enrouleur-dérouleur conforme à l'invention à un poste fixe,
- la figure 6 est un schéma identique à celui de la figure 5 mais montrant le raccordement de l'enrouleur-dérouleur à un poste mobile.

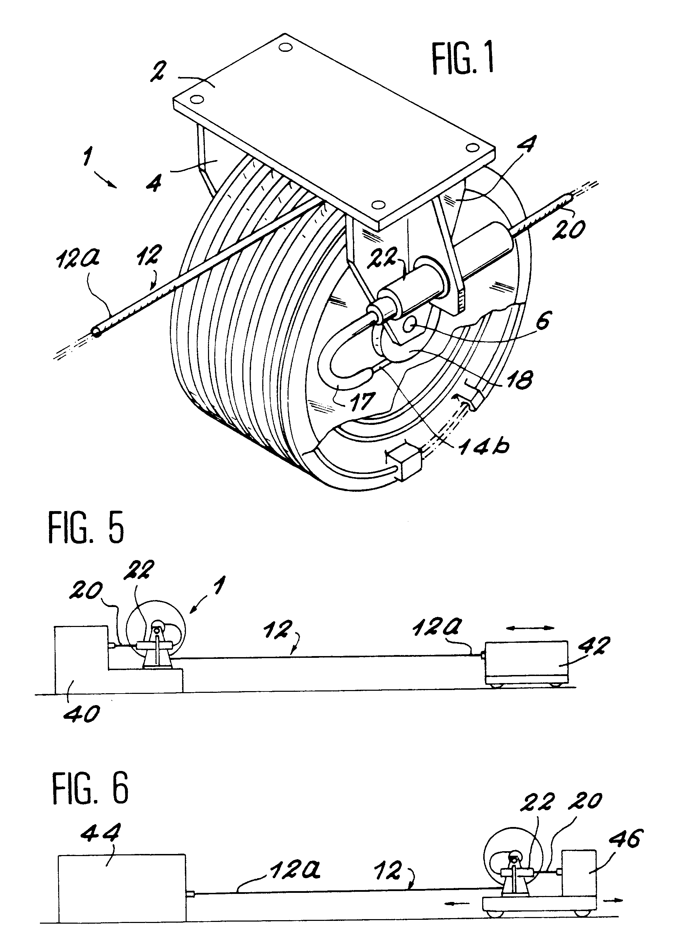

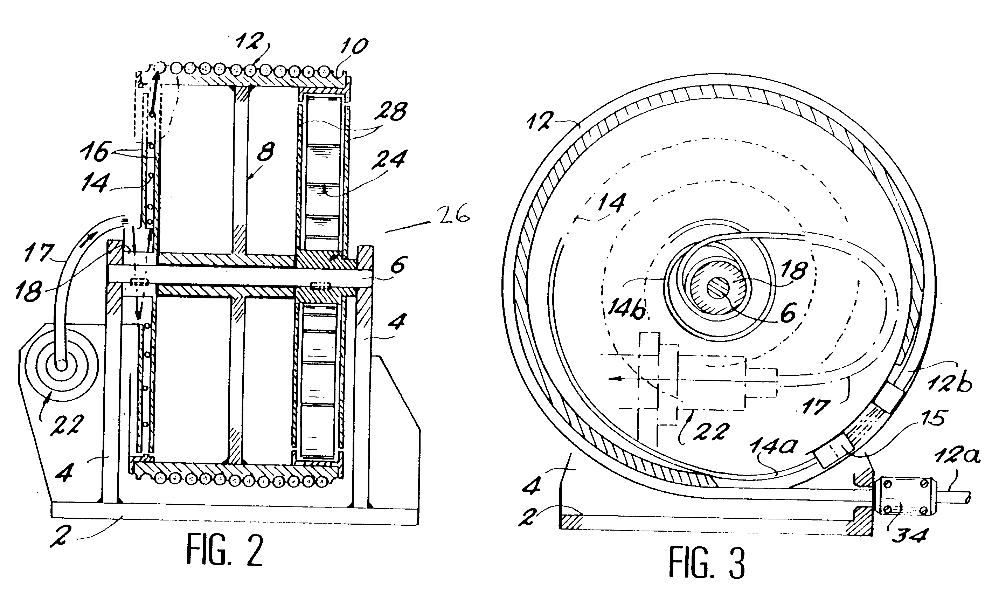

On a représenté sur la figure 1 une vue en perspective d'un enrouleur-dérouleur conforme à l'invention. Il est constitué d'un support fixe 2 comportant par exemple quatre trous de fixation permettant de le raccorder par des vis à un poste fixe ou à un poste mobile. Le support 2 est muni de deux flasques 4 supportant un axe de rotation 6 sur lequel un tambour 8 est monté tournant. Ce tambour comporte une gorge en hélice dans laquelle vient se loger un câble à fibres optiques principal 12. Comme on peut le voir sur la figure 2 et plus particulièrement sur la figure 3, un câble à fibres optiques 14, appelé câble de compensation est logé à l'intérieur du tambour 12. Il est de préférence maintenu entre deux flasques 16. Il comporte une extrémité 14b solidaire d'un noyau cylindrique fixe 18. De préférence, cette extrémité du câble de compensation 14 est enroulée en hélice sur quelques spires, par exemple deux ou trois, sur le noyau cylindrique fixe 18 afin de créer un déport latéral de ladite extrémité du câble 14 par rapport au flasque externe 16. Ce déport latéral a pour but de faciliter la sortie de l'extrémité fixe du câble de compensation 14 et son raccordement avec un autre câble optique présentant une structure par exemple identique à celle du câble à fibres optiques principal 12. A titre d'exemple non limitatif, cette extrémité 20 peut être reliée à l'extrémité 14b du câble de compensation 14 au moyen d'un connecteur multivoies 22 monté sur le support 2. Un guide rigide 17 protège le câble à fibres optiques 14.

A son autre extrémité 14a, le câble optique de compensation 14 est monté fixe sur la paroi périphérique du tambour 8. Comme on peut le voir sur la figure 3, le tambour 8 comporte une ouverture qui permet de raccorder l'extrémité 14a du câble de compensation à l'extrémité 12b du câble à fibres optiques principal 12 au moyen d'un boîtier de liaison 15. En effet, le câble de compensation est enroulé à l'intérieur du tambour tandis que le câble principal est enroulé à l'extérieur de ce tambour.

L'enrouleur-dérouleur comporte également un ressort spiral 24 disposé à l'intérieur du tambour. Le ressort spiral comporte une extrémité interne montée fixe sur un moyeu 26 lui-même fixe par rapport au bâti 2 et une extrémité externe rendue solidaire du tambour 8. De préférence, le ressort spiral 24 est guidé de part et d'autre par deux flasques 28.

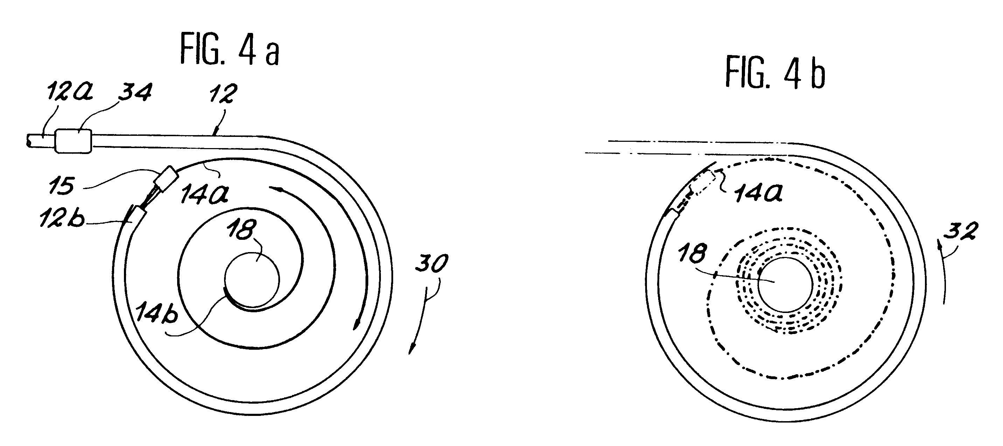

Comme on peut le voir sur la figure 1, une certaine longueur de câble peut être enroulée sur le tambour 8. Par exemple, si la gorge du tambour comporte six pas, il sera possible d'enrouler sur le tambour 8 une longueur de câble correspondant à six fois la circonférence moyenne du tambour. Le sens correspondant d'enroulement du câble 12 sur le tambour a été désigné par la flèche 30 sur la figure 4a. Lorsque l'on enroule ainsi le câble optique principal 12 en faisant tourner le tambour selon le sens de la flèche 30, l'extrémité 14a du câble optique de compensation effectue un nombre correspondant de tours, de telle sorte que le câble de compensation 14 enroulé sur le noyau 18 se desserre.

Inversement, lorsque l'on déroule le câble à fibres optiques principal 12 en faisant tourner le tambour 8 selon le sens désigné par la flèche 32 sur la figure 4b, l'extrémité 14a du câble de compensation fixée sur le tambour effectue un nombre correspondant de tours dans le sens de la flèche 32 de telle sorte que les spires du câble à fibres optiques de compensation 14 se resserrent sur le noyau 18 comme représenté sur la figure 4b.

Ainsi, lorsque le câble principal 12 est en position enroulée, les spires du câble de compensation sont desserrées. Au contraire, lorsque le câble à fibres optiques principal 12 est en position déroulée, les spires du câble de compensation 14 sont plus nombreuses et plus resserrées.

On remarque également que le ressort de rappel en spirale a un comportement comparable à celui du câble de compensation 14. Lorsque le câble principal 12 est en position enroulée, les spires de ce ressort sont desserrées. L'effort de traction sur le câble principal est alors minimal. Au contraire, lorsque le câble à fibres optiques principal est en position déroulée, les spires du ressort 24 sont resserrées et l'effort de traction sur le câble principal est maximal. On remarquera également sur les figures 3 et 4a la butée fixe 34 montée sur le câble principal qui définit la position d'enroulement maximal de ce câble principal en empêchant le tambour de poursuivre sa rotation jusqu'à la détente complète du ressort spiral 24.

On remarquera également que le ressort de rappel en spiral 24 peut être remplacé par un motoréducteur asservi, une manivelle ou tout autre moyen à la portée de l'homme de l'art.

Si on désire exploiter l'enrouleur-dérouleur sur N tours de tambour et si l'on suppose que D et d sont respectivement les diamètres maximal et minimal d'enroulement en spirale du câble optique de compensation et que L est la longueur de câble de compensation correspondant à sa zone d'enroulement en spirale, le nombre minimal Ne de spires en position enroulée du câble optique principal 12 est donné par la formule :

$$Ne = \frac{L}{\pi . D}$$

Le nombre Nd de spires en position déroulée (figure 4b) devra donc être :

$$Nd = Ne + N$$

Ceci impose la condition suivante :

$(N_e + N).\pi d < L$, soit : $L(1 - d/D) > N\pi.d$.

La valeur minimale de d est imposée par la spécification du rayon de courbure minimal acceptable par le câble de compensation. La structure de câble la plus favorable de ce point de vue est celle d'un câble obtenu par collage direct à fibres nues. Le rayon de courbure minimal pour un tel câble, quoique sensiblement plus élevé que celui d'une fibre optique seule, reste du même ordre de grandeur.

Les autres caractéristiques demandées à ce câble sont d'avoir une raideur suffisante pour éviter tout affaissement excessif de la spirale et une rugosité très faible afin de faciliter le glissement des spires.

On a représenté sur la figure 5 un enrouleur-dérouleur conforme à l'invention, désigné par la référence 1, monté sur une station fixe 40. On voit que dans ce cas le câble optique 20 relié au connecteur multivoies 22 aboutit à la station fixe 40 tandis que l'extrémité libre 12a du câble principal 12 aboutit à un poste mobile 42.

Au contraire, sur la figure 6, l'extrémité libre 12a du câble 12 est reliée à un poste fixe 44 tandis que le poste mobile 46 est relié au connecteur multivoies par l'intermédiaire du câble optique 20.

Le dispositif qui vient d'être décrit s'applique à la téléintervention en secteur nucléaire, en particulier dans les usines de retraitement et les laboratoires de recherches associés. L'enrouleur-dérouleur conforme à l'invention doit être durci aux rayonnements nucléaires. Il doit être étanche aux eaux de ruissellement et doté de connexions optiques (connecteur multivoies 22) télémanipulables, c'est-à-dire aptes à être montées et démontées à distance au moyen d'un télémanipulateur. Enfin, on remarquera que la liaison intermédiaire, au moyen d'un boîtier de liaison 15, entre l'extrémité 12b du câble à fibres optiques principal 12 située sur le tambour et l'extrémité 14a du câble de compensation 14 n'est pas indispensable. Ce boîtier de liaison 15 peut être éliminé si le même câble sert à la fois de câble principal et de câble de compensation. Ceci n'est possible que dans le cas où les caractéristiques nécessaires à la fonction de compensation (faible épaisseur, raideur suffisante) ne sont pas incompatibles avec celles que requiert le câble principal (solidité mécanique, inertie chimique).

**Revendications**

1. Enrouleur-dérouleur pour un câble à fibres optiques principal (12) comportant une pluralité de fibres optiques, ledit câble optique principal (12) ayant une extrémité (12b) destinée à être fixé à une zone d'enroulement d'un tambour tournant, ledit enrouleur-dérouleur comprenant un support fixe (2), un tambour (8) présentant une zone d'enroulement pour ledit câble à fibres optiques principal, ledit tambour (8) étant monté tournant sur un axe (6) monté sur le support fixe (2), caractérisé par un câble optique de compensation (14) enroulé en spirale à l'intérieur du tambour (8) et ayant une extrémité fixée sur ledit tambour (8) et destinée à être raccordée à l'extrémité (12b) du câble optique principal (12), et ayant une extrémité montée sur une partie fixe (18) du support.

2. Enrouleur-dérouleur selon la revendication 1, caractérisé en ce qu'il comporte un ressort de rappel (24) enroulé en spirale et ayant une extrémité (26) solidaire d'une partie fixe du support et une extrémité montée fixe sur ledit tambour tournant (8).

3. Enrouleur-dérouleur selon l'une quelconque des revendications 1 et 2, caractérisé en ce que le câble à fibres optiques de compensation (14) est monté entre deux flasques (16).

4. Enrouleur selon l'une quelconque des revendications 1 à 3, caractérisé en ce que le câble à fibres optiques principal (12) et le câble à fibres optiques de compensation (14) sont constitués par un seul et même câble.

5. Enrouleur selon l'une quelconque des revendications 1 à 4, caractérisé en ce que le câble à fibres optiques de compensation (14) est constitué par un câble plat constitué de plusieurs fibres optiques accolées l'une à l'autre.

6. Enrouleur selon la revendication 5, caractérisé en ce que le câble plat (14) est constitué par des fibres optiques nues collées côte à côte.

7. Enrouleur selon l'une quelconque des revendications 1 à 6, caractérisé en ce que le câble à fibres optiques de compensation (14) comporte, du côté de son extrémité montée sur le support, une zone enroulée en hélice sur un cylindre fixe faisant partie du support, de manière à créer un déport latéral de l'extrémité du câble de compensation facilitant sa sortie sans contraintes mécaniques.

8. Enrouleur selon l'une quelconque des revendications 1 à 7, caractérisé en ce qu'il comporte un connecteur multivoies (22) monté sur le support (2) pour raccorder l'extrémité du câble optique de compensation (14) montée sur ce support avec un autre câble à fibres optiques (20).

9. Enrouleur selon l'une quelconque des revendications 1 à 3, caractérisé en ce qu il comprend un boîtier de liaison (15) pour effectuer la liaison entre l'extrémité du câble à fibres optiques principal (12b) devant être fixée sur le tambour tournant (8) et l'extrémité (14a) du câble à fibres optiques de compensation (14) montée sur ledit tambour.

## Claims

1. Winder-unwinder for optical fibre cables, characterized in that it comprises a support (2), a drum (8) having a winding zone for an optical fibre cable (12) with a plurality of optical fibres, said drum (8) being mounted in rotary manner on a shaft mounted on the fixed support (2), the main optical cable (12) having an end (12b) fixed to the winding zone of said rotary drum, an optical compensation cable (14) spirally wound within the drum (8) end having one end fixed to said drum (8) and connected to the end (12b) of the main optical cable (12) end one end mounted on a fixed part (18) of the support.

2. Winder-unwinder according to claim 1, characterized in that it has a spirally wound return spring (24) and an end (26) integral with a fixed part of the support and an end fixed to the rotary drum (8).

3. Winder-unwinder according to either of the claims 1 and 2, characterized in that the optical fibre compensating cable (14) is mounted between two end plates (16).

4. Winder according to any one of the claims 1 to 3, characterized in that the main optical fibre cable (12) and the optical fibre compensating cable (14) are formed by the same cable, the compensation being provided by part of the main optical fibre cable spirally wound within the rotary drum (8).

5. Winder according to any one of the claims 1 to 4, characterized in that the optical fibre compensating cable (14) is constituted by a flat cable formed by several optical fibres joined to one another.

6. Winder according to claim 5, characterized in that the flat cable (14) is constituted by bare optical fibres bonded in juxtaposed manner.

7. Winder according to any one of the claims 1 to 6, characterized in that the optical fibre compensating cable (14) has, on the side of its end mounted on the support, a zone helically wound onto a fixed cylinder forming part of the support, so as to create a lateral displacement of the end of the compensating cable facilitating its mixing out without any mechanical stressing.

8. Winder according to any one of the claims 1 to 7, characterized in that it has a multichannel connector (22) mounted on support (2) for connecting the end of the optical compensating cable (14) mounted on said support to another optical fibre cable (20).

9. Winder according to any one of the claims 1 to 3, characterized in that the connection between the end of the main optical fibre cable (12b) fixed to the rotary drum (8) and the end (14a) of the optical fibre compensating cable (14) mounted on said drum is brought about by means of a connecting box (15).

## Patentansprüche

1. Auf- und Abwickelvorrichtung für ein faseroptisches Hauptkabel (12), welches aus einer Vielzahl von Lichtwellenleitern besteht, wobei ein Ende (12b) dieses Kabels dafür vorgesehen ist, in der Wickelzone einer sich drehenden Trommel fixiert zu werden. Obige Auf- und Abwickelvorrichtung besteht aus einem Gestell (2) und einer Trommel (8) mit Wickelzone für besagtes faseroptisches Kabel, die drehend um eine am Gestell (2) befestigte Achse (6) angebracht ist;
**gekennzeichnet**
durch ein optisches Kompensationskabel (14), das spiralförmig im Innenraum der Trommel (8) aufgewickelt ist und ein an der Trommel (8) befestigtes Ende aufweist, das dazu bestimmt ist, mit dem Ende (12b) des faseroptischen Kabels verbunden zu werden, wobei das andere Ende des Kompensationskabels (14) an einem festen Teil des Gestells befestigt ist.

2. Auf- und Abwickelvorrichtung nach Anspruch 1, dadurch gekennzeichnet, daß sie eine spiralförmige Spannfeder (24) besitzt, deren eines Ende mit einem festen Teil des Gestells verbunden ist und deren anderes Ende fest an der besagten drehbaren Trommel (8) angebracht ist.

3. Auf- und Abwickelvorrichtung gemäß einer der Ansprüche nach 1 und 2, gekennzeichnet dadurch, daß das faseroptische Kompensationskabel (14) zwischen zwei Scheiben (16) verläuft.

4. Aufwickelvorrichtung gemäß einer der Ansprüche nach 1 bis 3, gekennzeichnet dadurch, daß das faseroptische Hauptkabel (12) und das faseroptische Kompensationskabel (14) durch ein und dasselbe Kabel dargestellt werden.

5. Aufwickelvorrichtung gemäß einer der Ansprüche nach 1 bis 4, gekennzeichnet dadurch, daß das faseroptische Kompensationskabel (14) durch ein Flachkabel dargestellt wird, welches aus mehreren aneinanderliegenden Lichtwellenleitern besteht.

6. Aufwickelvorrichtung nach Anspruch 5, gekennzeichnet dadurch, daß das Flachkabel (14) aus nebeneinander liegend verklebten, unisolierten Lichtwellenleitern besteht.

7. Aufwickelvorrichtung gemäß einer der Ansprüche nach 1 bis 6, gekennzeichnet dadurch, daß sich neben dem am Gestell angebrachten Ende des faseroptischen Kompensationskabels (14) eine sich über einen - als Bestandteil des Gestells - feststehenden Zylinder erstreckende schneckenförmige Aufwickelzone befindet, derart, daß ein seitliches Verschieben des Kompensationskabels erreicht wird, um so sein Austreten zu erleichtern, ohne mechanische Beanspruchungen auftreten zu lassen.

8. Aufwickelvorrichtung gemäß einer der Ansprüche nach 1 bis 7, gekennzeichnet dadurch, daß sie einen am Gestell (2) angebrachten Mehrfachsteckverbinder (22) besitzt, um das an diesem Gestell angebrachte Ende des faseroptischen Kompensationskabels (14) mit einem anderen faseroptischen Kabel (20) zu verbinden.

9. Aufwickelvorrichtung gemäß einer der Ansprüche nach 1 bis 3, gekennzeichnet dadurch, daß sie über ein Verbindungsgehäuse (15) verfügt, um das Verbinden des an der sich drehenden Trommel (8) befestigten Endes des Hauptkabels (12b) mit dem Ende (14a) des an der besagten Trommel angebrachten faseroptischen Kompensationskabels (14) zu ermöglichen.

FIG. 1

FIG. 5

FIG. 6

FIG. 2

FIG. 3

EP 0 343 057 B1

# FIG. 4 a

# FIG. 4 b

EP 0 343 057 B1